# EUROPEAN PATENT APPLICATION

(11) **EP 4 503 364 A1**
(43) Date of publication of application: **05.02.2025**
(21) Application number: 23188701.9
(22) Date of filing: 31.07.2023
(51) Int. Cl.: H02J 1/10, H02J 1/14, H02J 3/14, H02J 3/38, H02J 3/32

(54) **A CONVERTER SYSTEM FOR AN ELECTRIC METAL HEATING FURNACE SYSTEM**

(71) Applicant: Hitachi Energy Ltd, 8050 Zürich (CH)
(72) Inventor: RASMUSSEN, Jon, 426 68 Västra Frölunda (SE); ZHANG, Hongyang, 115 24 Stockholm (SE)
(74) Representative: AWA Sweden AB

(57) **Abstract**

A converter system (1) connectable to an electrical power grid (4) via a load bus (5), and to an electric metal heating furnace system (7). The converter system comprises a first power converter (2), and a second power converter (3). Each one of the power converters comprises AC and DC terminals (12, 15, 13, 16). The first power converter is connectable to the load bus, and, at its DC terminals, to the second power converter and to an energy storage system. The second power converter is connectable, at its DC terminals, to the first power converter and to the energy storage system, and, at its AC terminals, to the electrical metal heating furnace system and to the load bus. The converter system further has a control unit to set the converter system in any of several operational modes. One operational mode is a STATCOM mode where at least one of the power converters is connected to the load bus and acts as a STATCOM for the electric metal heating furnace system. The electric metal heating furnace system is connected to the load bus. Another operational mode is a power supply mode where the first power converter is connected to the load bus, the second power converter is connected to the first converter and to the electric metal heating furnace system, and the electric metal heating furnace system is disconnected from the load bus.

## Description

### TECHNICAL FIELD

The present disclosure relates to a converter system connectable to an electric power grid and to an electric metal heating furnace system.

### BACKGROUND

An electric metal heating furnace system is, for example, used in a steel factory for melting the raw material. The electric metal heating furnace system has one or more electric arc furnaces (EAF) and/or ladle furnaces (LF) and causes voltage flicker in the power supply system, such as the electric grid. This disturbance is, for example, compensated for by providing a static synchronous compensator (STATCOM), which is connected to the power supply line, called load bus, and thereby to the electric metal heating furnace system. Typically, the STATCOM is a power electronic converter, such as a modular multilevel converter (MMC). However, the compensation is not always complete or the EAF/LF may have an additional negative impact on the power supply system. Short circuits in the arc furnace electrodes, which may occur, cannot be limited by such a STATCOM solution.

According to another known solution, as disclosed in US 8933378, an EAF can be connected to the load bus via power electronic converters connected in AC/DC/AC configurations. Thereby, the unfavored dynamics from the EAF are decoupled from the power supply system and the electricity is supplied via the AC/DC/AC converter to the EAF. The series connection of the EAF has the benefits of improved power quality. However, the availability of the AC/DC/AC conversion cannot be always ensured, due to maintenance or outages. The associated downtime is expensive.

### SUMMARY

The present disclosure seeks to, at least partly, remedy the above discussed issues. To achieve this, a converter system and a method of controlling an electric metal heating furnace system, as defined by the independent claims, are provided. Further embodiments are provided in the dependent claims.

According to an aspect of the present disclosure, there is provided a converter system connectable to an electrical power grid via a load bus, and to an electric metal heating furnace system, which is connectable to the electrical power grid via the load bus. The converter system comprises a first power converter, and a second power converter, wherein each one of the first and second power converters comprises alternating current, AC, terminals and direct current, DC, terminals. The first power converter is connectable, at its AC terminals, to the load bus, and, at its DC terminals, to the second power converter and to an energy storage system. The second power converter is further connectable, at its DC terminals, to the first power converter and to the energy storage system, and, at its AC terminals, to the electrical metal heating furnace system and to the load bus. The converter system further comprises a control unit, which is configured to set the converter system in any of several operational modes by controlling the connections of the first and second power converter, and by controlling the connections of the electrical metal heating furnace system to the load bus and to the converter system. The operational modes comprise a STATCOM mode where at least one of the first and second power converters is connected to the load bus and is configured to act as a STATCOM for the electric metal heating furnace system, and where the electric metal heating furnace system is connected to the load bus. Another operational mode is a power supply mode where the first power converter is connected to the load bus, the second power converter is connected to the first power converter and to the electric metal heating furnace system, and the electric metal heating furnace system is disconnected from the load bus.

An advantage of this converter system is that a flexible operation of converter system can be achieved such that different operational states can be provided with the same equipment, and such that an operation may be upheld even if one of the converters is temporarily unavailable.

Furthermore, investment and footprint may be reduced compared to that of prior art solutions which need to be used in combination to provide multiple operational states.

According to an embodiment, the converter system may further comprise a first switching unit connected to the AC terminals of the first power converter and connectable to the load bus, a second switching unit connected to the AC terminals of the second power converter and connectable to the load bus, and a third switching unit connected to the AC terminals of the second power converter and connectable to the electric metal heating furnace system, wherein the control unit is connected to the first, second and third switching units.

According to an embodiment, the converter system may further comprise an energy storage system, which is connectable to the first and second power converters at their DC terminals.

According to an embodiment, the operational modes may further comprise a combined power compensation mode, where one of the first and second power converters is connected merely to the load bus and configured to provide reactive power compensation, and the other power converter is connected to the load bus and to the energy storage system and is configured to provide active power compensation.

According to an embodiment, the converter system may further comprise a fourth switching unit, which is connected to the DC terminals of the first and second power converters, and which is connectable to the energy storage system. The control unit is connected to the fourth switching unit.

According to an embodiment, the energy storage system is included in the converter system.

According to an embodiment, the energy storage system comprises at least one power supply unit comprising at least one of a battery energy storage system and a hydrogen energy storage system.

According to another aspect of the present disclosure, there is provided a method of controlling an electric metal heating furnace system, which is connectable to the electrical power grid via a load bus, the converter system comprising a first power converter, and a second power converter, wherein each one of the first and second power converters comprises alternating current, AC, terminals and direct current, DC, terminals. The method comprises setting the converter system in any of several operational modes, and, on command, changing operational mode, comprising setting the converter system in a STATCOM mode by connecting at least one of the first and second power converters to the load bus and is configuring that power converter to act as a STATCOM for the electric metal heating furnace system, and connecting the electric metal heating furnace system to the load bus. The method further comprises setting the converter system in a power supply mode by connecting the first power converter to the load bus, connecting the second power converter is to the first converter and to the electric metal heating furnace system, and disconnecting the electric metal heating furnace system from the load bus.

According to an embodiment, the method may further comprise setting the converter system in a combined power compensation mode by connecting one of the first and second power converters merely to the load bus and configuring that one power converter to provide reactive power compensation, and connecting the other power converter to the load bus and to the energy storage system and configuring that other power converter to provide active power compensation.

Other objectives, features and advantages of the disclosed embodiments will be apparent from the following detailed disclosure as well as from the drawings.

It is noted that embodiments of the present disclosure relate to all possible combinations of features recited in the claims. Further, it will be appreciated that the various embodiments described for the system as defined in accordance with the first aspect and the embodiments described for the method according to the second aspect are all combinable with each other.

### BRIEF DESCRIPTION OF THE DRAWINGS

This and other aspects of the present disclosure will now be described in more detail, with reference to the appended drawings showing embodiments of the disclosure.
Figure 1 is a block diagram of an embodiment of the converter system according to the present disclosure, and external devices to which the converter system is connectable;
Figures 2-4 are block diagrams of different operational modes of the converter system;
Figures 5 and 6 are block diagrams of exemplifying power converter structures;
Figures 7 and 8 are block diagrams of exemplifying energy storage system structures; and
Figure 9 is a flow chart of an embodiment of a method according to the present disclosure.

### DETAILED DESCRIPTION

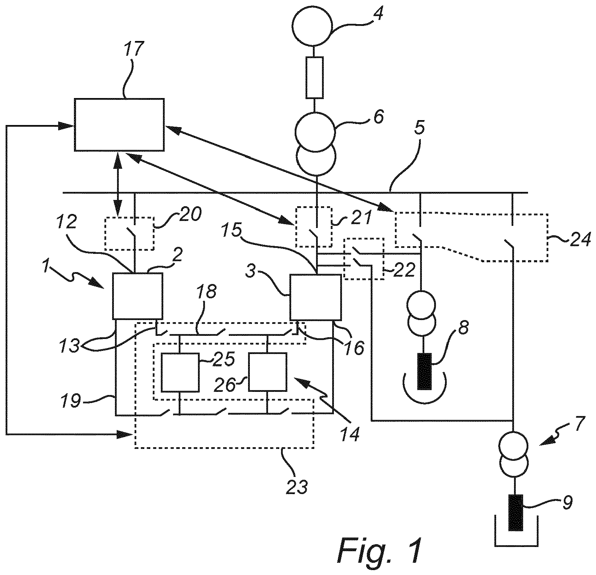

According to an embodiment of the converter system 1, as shown in Figure 1, the converter system 1 comprises a first power converter 2, and a second power converter 3. The converter system 1 is connectable to an electrical power grid 4 via a load bus 5. The electrical power grid 4 is a general power distribution system, typically including high or medium voltage transmission lines, and supplying power from one or more power plants. Presently, and even more in the future, the power plant may be a renewable power generation resource such as a wind farm or a solar farm. The load bus 5 is a medium voltage line, e.g. 33 kV, and it is typically connected to the grid 5 via a step-up transformer 6. Additionally, the converter system 1 is connectable to an electric metal heating furnace system 7, which, in turn, is connectable to the load bus 5. The electric metal heating furnace system 7 may comprise one or more furnaces of the types EAF or LF, such as one EAF 8 and one LF 9 as illustrated in Figure 1. Each EAF/LF 8, 9 is connected to the load bus 5 via a power transformer 10, 11.

Further, the first power converter 2 comprises AC (Alternating Current) terminals 12, which are connectable to the load bus 5, and DC (Direct Current) terminals 13, which are connectable to both the second power converter 3 and to an energy storage system 14. Correspondingly, the second power converter 3 comprises AC terminals 15, which are connectable to the load bus 5, and DC terminals 16, which are connectable to the first power converter 2 and to the energy storage system 14. The AC terminals 15 of the second power converter 3 are, additionally, connectable to the electrical metal heating furnace system 7. The converters may be of any suitable AC/DC converter type that is operable both ways, i.e. both from AC to DC and from DC to AC. An advantageous example will be given below.

Furthermore, the converter system 1 comprises a control unit 17, which is configured to set the converter system in any of several operational modes by controlling the connections of the first and second power converter 2, 3, and by controlling the connections of the electrical metal heating furnace system 7 to the load bus 5 and to the converter system 1. The control unit 17 may, for instance, be a separate device or may be arranged in one of the power converters 2, 3, such as in the local control circuitry of the power converter 2, 3, or may be a distributed structure residing in both of the power converters 2, 3. Further arrangements of the control unit 17 may be feasible as well, as recognised by the person skilled in the art.

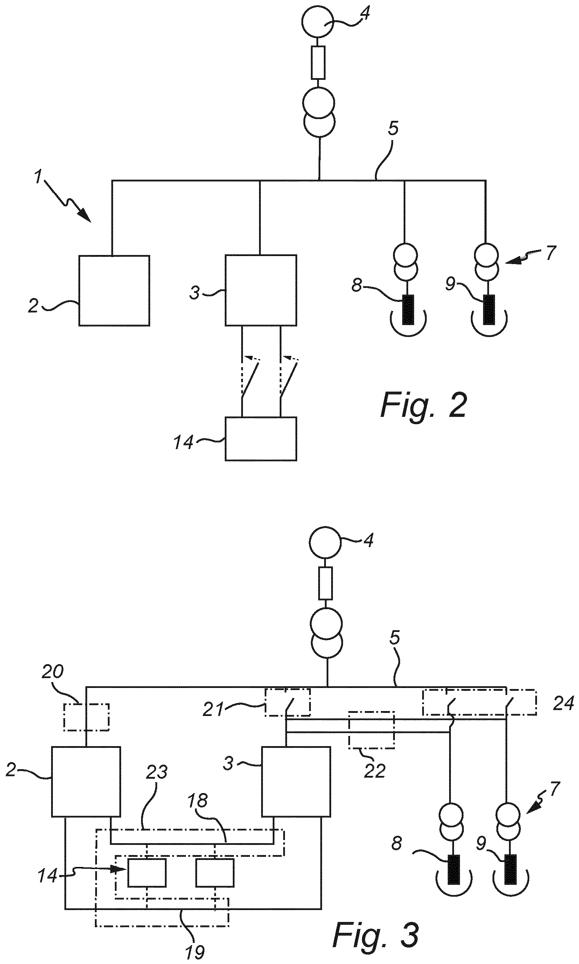

The operational modes comprise several different operational modes, at least some of which will be described herein. In the present embodiment the control unit 17 is configured to be able to set the converter system in at least two of the operational modes. For the purposes of this application, a first operational mode is called a STATCOM mode and is illustrated in Figure 2. In the STATCOM mode at least one of the first and second power converters 2, 3 is connected to the load bus 5 and is configured to act as a STATCOM for the electric metal heating furnace system 7. Further, the electric metal heating furnace system 7 is connected to the load bus 5. In this first operational mode, the first and/or second power converter(s) is/are used for flicker compensation on the load bus 5. Since there are two separate power converters providing, or being able to provide, the same kind of operation, the converter system 1 is less vulnerable to non-availability of the power converters 2, 3 than if there were only one power converter. A second operational mode, as illustrated in Figure 3, is called a power supply mode where the first power converter 2 is connected to the load bus 5, the second power converter 3 is connected to the first converter 2 and to the electric metal heating furnace system 7, and the electric metal heating furnace system 7 is disconnected from the load bus 5. In this second operational mode the first and second power converters 2, 3 provide a protection for the load bus 5 against the undesired variations caused by the EAF/LF 8, 9.

According to an embodiment of the converter system, as also shown in Figure 1, the connectability of the first and second power converters 2, 3 is obtained by means of switching units which are comprised in the converter system 1. Consequently, a first switching unit 20 is connected to the AC terminals 12 of the first power converter 2. The first switching unit 20 is connectable to the load bus 5. It should be noted that typically, provided that the grid is a 3-phase system, the load bus 5 comprises three phases and the AC terminals comprise three terminals, one for each phase. Consequently, the first switching unit 20 comprises three switches, as is obvious to the person skilled in the art although not shown in detail in the drawings. As regards the DC terminals 13, 16 they are typically two terminals as shown, a positive voltage terminal connected with a positive pole bus 18, and a negative voltage terminal connected with a negative pole bus 19. Further, a second switching unit 21 is connected to the AC terminals 15 of the second power converter 3 and connectable to the load bus 5. A third switching unit 22 is connected to the AC terminals 15 of the second power converter 3 and is connectable to the electric metal heating furnace system 7. The control unit 17 is connected to the first, second and third switching units 20-22 for controlling the switching thereof.

According to an embodiment of the converter system, again with reference to Figure 1, the converter system 1 comprises the energy storage system 14. In other words, in this embodiment the energy storage system 14 is an actual part of the converter system 1. The energy storage system 14 is connected to the DC terminals 13, 16 of the first and second power converters 2, 3 via a fourth switching unit 23. The control unit 17 is connected to the fourth switching unit 23. The fourth switching unit 23 is for example composed of several switches, which are able to provide several different interconnection patterns between parts of the energy storage system 14 and the first and second power converters 2, 3. For example, the energy storage system 14 may comprise first and second power supply units 25, 26, which are connected to the positive and negative pole buses 18, 19. Switches of the fourth switching unit 23 are arranged in the positive and negative pole buses 18, 19 such that by closing or opening the switches in different combinations the first and second power supply units 25, 26 and the first and second power converters 2, 3 are interconnectable in several different interconnection patterns, including interconnecting merely the first power supply unit 25 and the first power converter 2, and/or interconnecting merely the second power supply unit 26 and the second power converter 3, interconnecting both power supply units 25, 26 in parallel with one of the first and second power converters 2, 3, and interconnecting the first and second power converters 2, 3 with each other and with the parallel-connected first and second power supply units 25, 26, as can be understood from Figure 1.

According to an embodiment of the converter system as illustrated in Figure 2, the operational modes further comprise a combined power compensation mode, where the first power converter 2 is connected merely to the load bus 5 and is configured to provide reactive power compensation, and the second power converter 3 is connected to the load bus 5 and to the energy storage system 14 and is configured to provide active power compensation. The connection of the second power converter 3 to the energy storage system 14 is indicated in Figure 2 with the broken lines and the arrows illustrating closing of the switches between the second power converter 3 and the energy storage system 14. It should be noted that in this operational mode the second power converter 3 may be connected to one or more power supply units of the energy storage system 14.

According to an embodiment of the converter system as illustrated in Figure 3, in the power supply mode described above switches of the fourth switching unit 23 are accordingly closed. Further, the first switching unit 20 is in a closed state, the second switching unit 21 is in an open state, the third switching unit 22 is in a closed state, and a fifth switching unit 24 arranged between the electric metal heating furnace system 7 and the load bus 5, is in an open state. Thereby, power is supplied from the load bus 5 to the EAF 8 and/or the LF 9 by means of the interconnected first and second power converters 2,3. In this embodiment the first and second power converters 2, 3 are interconnected in an AC/DC/AC configuration. As an alternative, in this power supply mode the energy storage system 14 may be connected to the positive and negative pole buses 18, 19 between the first and second power converters 2, 3, as shown with broken lines in Figure 3. When the energy storage system 14 comprises more than one power supply unit 25, 26 they are then connected to the positive and negative pole buses 18, 19 in parallel to each other. While power is provided to the EAF/LF 8, 9 the energy storage system 14 is charged. Additionally, at a temporary power loss of the load bus 5, the energy storage system 14 is configured to supply power to the EAF/LF 8, 9.

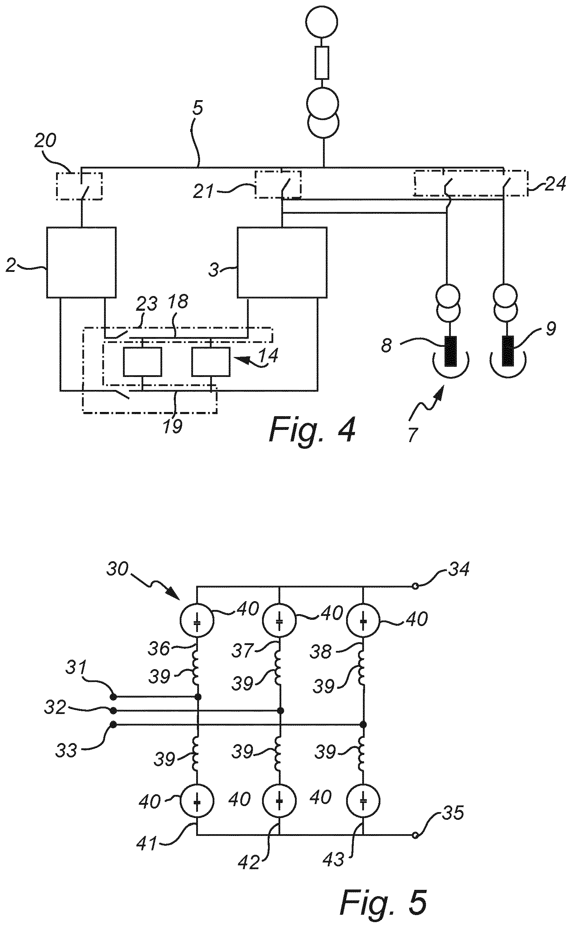

According to an embodiment of the converter system the operational modes further comprise a back-up power supply mode, as illustrated in Figure 4. In the back-up power supply mode, the first and second power converters 2, 3 are disconnected from the load bus 5, i.e. the first and second switching units 20, 21 are switched to an open state. Further, by properly switching switches of the fourth switching unit 23, the first power converter 2 has been disconnected from the positive and negative pole buses 18, 19, while the second power converter 3 has been connected with the positive and negative pole buses 18, 19. The energy storage system 14 is connected with the positive and negative pole buses 18, 19 as well. The third switching unit 22 has been switched to a closed state, while the fifth switching unit 24 has been switched to an open state. Thereby the electric metal heating furnace system 7 is connected to the second power converter 3. In this mode the energy storage system 14 supplies power, via the second power converter 3, to the electric metal heating furnace system 7.

It should be noted that the electric metal heating furnace system 7 may be additionally connectable to the AC terminals 12 of the first power converter 2 via a further switching unit, although not shown in the figures. Thereby, for instance in the back-up power supply mode, the electric metal heating furnace system 7 can be powered by the first power converter 2 instead of the second power converter 3, or both the first and second power converter 2, 3 can provide power to the electric metal heating furnace system 7 by being connected in parallel thereto. As a further alternative the power converters 2, 3 can supply power to one furnace each, e.g. the first power converter 8 supplying power to the EAF 8, and the second power converter 9 supplying power to the LF 9.

An example of a converter structure for the first and second power converters 2, 3 is shown in Figure 5. The converter structure is known as such but will be briefly described as follows. This example converter 30 is an MMC having a double-Y configuration. The converter 30 comprises AC terminals 31, 32, 33 and DC terminals 34, 35, upper phase arms 36, 37, 38, each comprising an inductance 39 and one or more submodules 40 and being connected between the AC terminals 31-33 and the positive DC terminal 34. Similarly, the converter 30 comprises lower phase arms 41, 42, 43, each comprising an inductance 39 and one or more submodules 40 and being connected between the AC terminals 31-33 and the negative DC terminal 35.

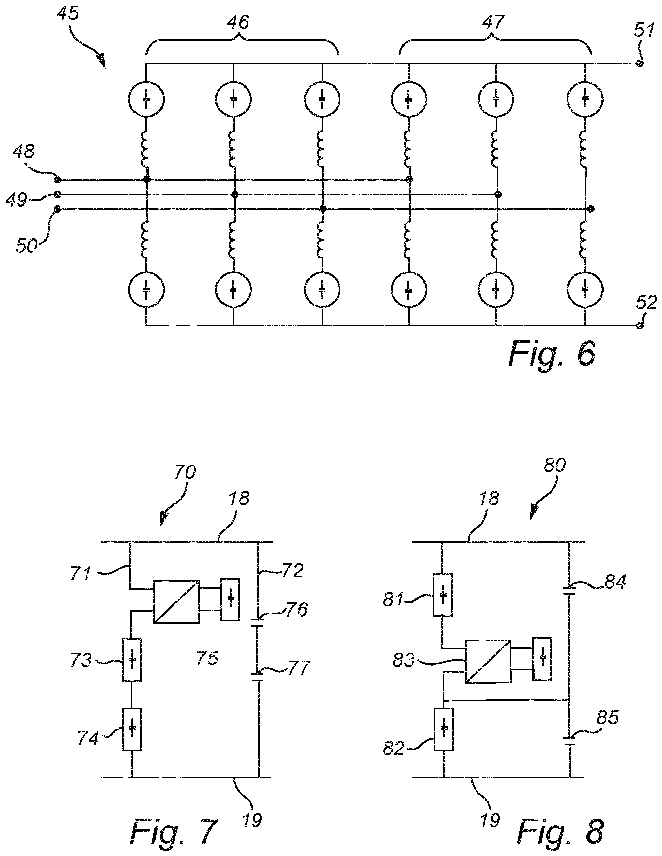

Another example of a converter structure is shown in Figure 6, this converter 45 consisting of two double-Y converter blocks 46, 47 connected in parallel between the AC terminals 48-50 and the DC terminals 51, 52. Each converter block 46, 47 has the structure described above in conjunction with Figure 5. This two double-Y converter has an increased current capability compared to the above converter 30 consisting of one double-Y converter, which is favourable in particular in the power supply mode, where the power is supplied to the electric metal heating furnace system 7 via the first and second converters 2, 3.

The energy storage system 14, and thus the one or more power supply units 25, 26 may be of any suitable type. For example, at least one power supply unit 25, 26 may comprise a battery, and more particularly a battery energy storage system, BESS, and/or a hydrogen storage system, etc. Thereby, it will be possible to provide back-up power, when the grid is down, that lasts for several melting cycles of the EAF 8 or the LF 9. That would not be possible if, for instance, merely supercapacitors are employed in the energy storage system 14. Assuming that a battery energy storage solution is employed there are numerous feasible configurations of power supply units including one or more BESS. Two configurations will be briefly described here as examples, in conjunction with Figures 7 and 8. In a first example, see Figure 7, the power supply unit 70 comprises two legs 71, 72 extending in parallel between the positive pole bus 18 and the negative pole bus 19. A first leg 71 thereof comprises two BESSes 73, 74 and a DC/DC converter 75 connected in series, wherein the DC/DC converter is connected to the positive pole bus 18 and to a first BESS 73 of the BESSes 73, 74. A second leg 72 thereof comprises two capacitor banks 76, 77 connected in series between the DC pole buses 18, 19. The DC/DC converter 75, inter alia, is used for adjusting the total DC voltage of the BESSes 73, 74 to the DC voltage across the negative and positive DC buses 18, 19. When several power supply units 70 are arranged in parallel they must have the same voltage. The capacitor banks 76, 77 smooth out power fluctuations.

In another example, as shown in Figure 8, the power supply unit 80 comprises the same parts as in the above example, i.e. two BESSes 81, 82, one DC/DC converter 83, and two capacitor banks 84, 85, and the BESSes 81, 82 and the DC/DC converter 83 are connected in series. However, in this example the DC/DC converter 83 is arranged between the BESSes 81, 82. Furthermore, one of the capacitor banks 84 is connected in parallel with the first BESS 81 between the positive DC bus 18 and an interconnection point of the first BESS 81 and the DC/DC converter 83. The other capacitor bank 85 is connected in parallel with the second BESS between the negative DC bus 19 and an interconnection point of the second BESS 82 and the DC/DC converter 83.

In order to facilitate the implementation of all different operational modes, the first and second power converters 2, 3 are preferably prepared for this in advance. For instance, the power converter 2, 3 may be designed to be able to handle a certain amount of active power transfer to/from one or several power supply units 25, 26. Further, the power converter 2, 3 may be rated for continuous or temporary active/reactive power transfer, dependent on the type of power supply unit 25, 26 that is intended to be used. The DC terminal voltage is selected in a way that enables a future energy storage system 14 to be connected and that enables transfer of the required active power. A sufficient DC terminal voltage is also required to compensate for negative sequence voltage of the loads, i.e. the EAF 8 and/ or the LF 9, when the converter is operating merely as a shunt compensator, for example as a STATCOM.

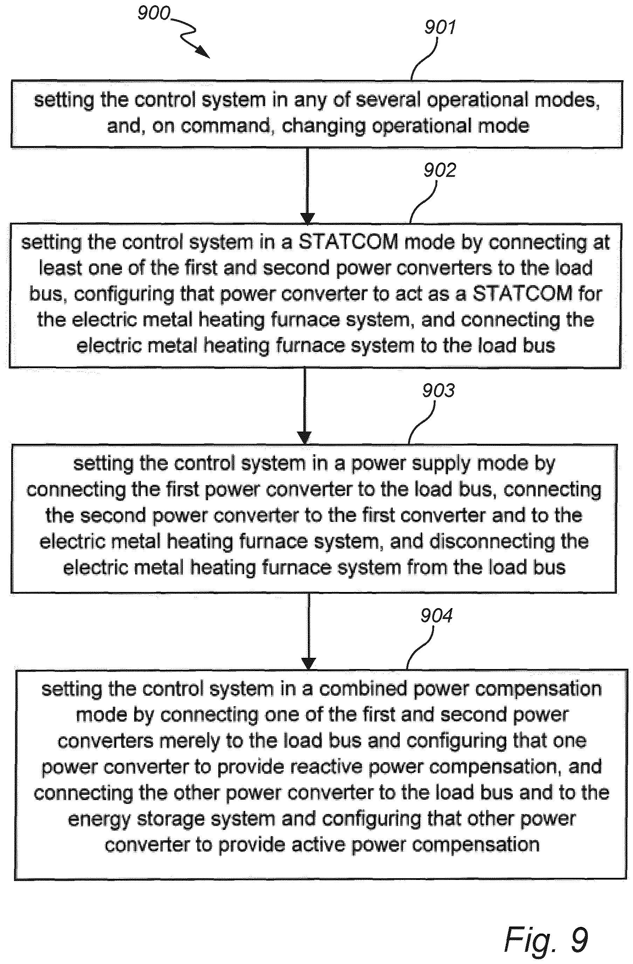

According to an embodiment of the method of controlling an electric metal heating furnace system, as shown in the flow chart of Figure 9, the method 900 comprises, in box 901, setting the converter system 1 in any of several operational modes, and, on command, changing operational mode. To execute that the method comprises setting the converter system 1 in a STATCOM mode by connecting at least one of the first and second power converters 2, 3 to the load bus 5, and configuring that power converter to act as a STATCOM for the electric metal heating furnace system, and connecting the electric metal heating furnace system 7 to the load bus 5, box 902. The method further comprises the option of setting the converter system 1 in a power supply mode by connecting the first power converter 2 to the load bus, connecting the second power converter 3 to the first converter 2 and to the electric metal heating furnace system 7, and disconnecting the electric metal heating furnace system 7 from the load bus 5, box 903.

The method may further comprise setting the converter system in a combined power compensation mode by connecting one of the first and second power converters 2, 3 merely to the load bus 5 and configuring that one power converter to provide reactive power compensation, and connecting the other power converter to the load bus 5 and to the energy storage system 14 and configuring that other power converter to provide active power compensation, box 904.

While the present disclosure has been illustrated and described in detail in the drawings and foregoing description, such illustration and description are to be considered illustrative or exemplary and not restrictive.

Although features and elements are described above in particular combinations, each feature or element can be used alone without the other features and elements or in various combinations with or without other features and elements.

Other variations to the disclosed embodiments can be understood and effected by those skilled in the art in practicing the present disclosure, from a study of the drawings, the description, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain features are recited in mutually different dependent claims does not indicate that a combination of these features cannot be used to advantage. Any reference signs in the claims should not be construed as limiting the scope.

## Claims

1. A converter system (1) connectable to an electrical power grid (4) via a load bus (5), and to an electric metal heating furnace system (7), which is connectable to the electrical power grid via the load bus, the converter system comprising a first power converter (2), and a second power converter (3), wherein each one of the first and second power converters comprises alternating current, AC, terminals (12, 15) and direct current, DC, terminals (13, 16), wherein the first power converter is connectable, at its AC terminals, to the load bus, and, at its DC terminals, to the second power converter and to an energy storage system (14), and wherein the second power converter is connectable, at its DC terminals, to the first power converter and to the energy storage system, and, at its AC terminals, to the electrical metal heating furnace system and to the load bus, the converter system further comprising a control unit, which is configured to set the converter system in any of several operational modes by controlling the connections of the first and second power converter, and by controlling the connections of the electrical metal heating furnace system to the load bus and to the converter system, wherein the operational modes comprise a STATCOM mode where at least one of the first and second power converters is connected to the load bus and is configured to act as a STATCOM for the electric metal heating furnace system, and where the electric metal heating furnace system is connected to the load bus, and a power supply mode where the first power converter is connected to the load bus, the second power converter is connected to the first converter and to the electric metal heating furnace system, and the electric metal heating furnace system is disconnected from the load bus.

2. The converter system according to claim 1, further comprising a first switching unit (20) connected to the AC terminals (12) of the first power converter (2) and connectable to the load bus (5), a second switching unit (21) connected to the AC terminals (15) of the second power converter (3) and connectable to the load bus (5), and a third switching unit (22) connected to the AC (16) terminals of the second power converter and connectable to the electric metal heating furnace system, wherein the control unit is connected to the first, second and third switching units.

3. The converter system according to claim 1 or 2, further comprising an energy storage system, which is connected to the first and second power converters at their DC terminals via a fourth switching unit 23.

4. The converter system according to any one of the preceding claims, wherein the operational modes further comprise a combined power compensation mode, where one of the first and second power converters is connected merely to the load bus and is configured to provide reactive power compensation, and the other power converter is connected to the load bus and to the energy storage system and is configured to provide active power compensation.

5. The converter system according to any one of the preceding claims, further comprising a fourth switching unit, which is connected to the DC terminals of the first and second power converters, and which is connectable to the energy storage system, wherein the control unit is connected to the fourth switching unit.

6. The converter system according to any one of the preceding claims, wherein each one of the power converters is a double-wye modular multilevel converter.

7. The converter system according to any one of the preceding claims, wherein the converter system comprises the energy storage system.

8. The converter system according to claim 7, wherein the energy storage system (14) comprises at least one power supply unit (25, 26) comprising at least one of a battery energy storage system and a hydrogen energy storage system.

9. A method of controlling an electric metal heating furnace system, which is connectable to the electrical power grid via a load bus, the converter system comprising a first power converter, and a second power converter, wherein each one of the first and second power converters comprises alternating current, AC, terminals and direct current, DC, terminals, the method comprising setting the converter system in any of several operational modes, and, on command, changing operational mode, comprising setting the converter system in a STATCOM mode by connecting at least one of the first and second power converters to the load bus and is configuring that power converter to act as a STATCOM for the electric metal heating furnace system, and connecting the electric metal heating furnace system to the load bus; and setting the converter system in a power supply mode by connecting the first power converter to the load bus, connecting the second power converter to the first converter and to the electric metal heating furnace system, and disconnecting the electric metal heating furnace system from the load bus.

10. The method according to claim 9, further comprising setting the converter system in a combined power compensation mode by connecting one of the first and second power converters merely to the load bus and configuring that one power converter to provide reactive power compensation, and connecting the other power converter to the load bus and to the energy storage system and configuring that other power converter to provide active power compensation.
